(19) Europäisches Patentamt / European Patent Office / Office européen des brevets

(11) **EP 3 206 136 A1**

(12) **EUROPEAN PATENT APPLICATION**
published in accordance with Art. 153(4) EPC

(43) Date of publication:
**16.08.2017 Bulletin 2017/33**

(51) Int Cl.:
*G06F 17/30* (2006.01)

(21) Application number: **15821618.4**

(22) Date of filing: **20.07.2015**

(86) International application number:
**PCT/CN2015/084484**

(87) International publication number:
**WO 2016/008452 (21.01.2016 Gazette 2016/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.07.2014 CN 201410345173**

(71) Applicant: **Shanghai Chule (CooTek) Information Technology Co., Ltd**
**Minhang District**
**Shanghai 200241 (CN)**

(72) Inventors:
• **WU, Kun**
**Shanghai 200241 (CN)**
• **DAI, Yun**
**Shanghai 200241 (CN)**

(74) Representative: **Guella, Paolo**
**Brevetti Dott. Ing. Digiovanni Schmiedt S.r.l.**
**Via Aldrovandi, 7**
**20129 Milano (IT)**

(54) **HIGHLY EFFECTIVE INPUT PREDICTION METHOD AND DEVICE**

(57) A highly effective input prediction method and device. The prediction method comprises: detecting user input; obtaining a prediction basis according to the historical text inputted by the user and the current input positions, the prediction basis being the text already inputted of a certain word length before the current input position; searching in a database on the basis of the prediction basis to obtain a prediction result, the prediction result at least comprising prediction word candidates two levels after the prediction basis. The present invention provides a user with prediction input result more in accordance to anticipation, and provides smoother prediction input experience.

Figure 1

**Description**

Technical Field

This disclosure refers to the field of electronic equipment input control, especially electronic equipment information input, including a predictive text input method and device.

Background

In recent years, mobile communication terminals such as mobile phone and tablets have become widely available. Input methods in mobile communication terminals are extremely important for the daily use of users. At present, most input methods may support prediction in typing. For the normal prediction abilities, they may be realized like this: if users want to type the word "special", they will type the first four letters, s-p-e-c, or even more letters one by one, then input method may predict the word which users want to type in according to entered letters. Such kinds of input methods may only predict words which users are currently typing in. Also, in order to improve the prediction accuracy, users normally need to type in half or more than half of the letters to get the prediction results, which inevitably influences users' input efficiency. Actually, such methods may no longer satisfy users' needs for speedy input.

What's more, for the higher prediction accuracy, such methods normally need a larger space in database. And the current popular prediction methods are always combined with cloud database. However, when the database was set in the cloud, every prediction through cloud database may be inevitably faced with bad connection due to the restriction of network, which not only wastes vast resources, but also unable to provide fluent input experiences.

To sum up, it is necessary to provide an input method with higher prediction efficiency and more influent prediction input experiences.

Contents of the Disclosure

This disclosure is aim to provide efficient prediction techniques so as to report back to users the prediction result which is more corresponding with their expectation, with a more fluent input experience.

This disclosure provides an efficient input prediction method based on one aspect, including detecting an input by a user; acquiring a prediction basis according to a historical text which the user has inputted and the current input position; searching a database according to the prediction basis to obtain a prediction result. The said prediction basis is an input text based on a preset word length before the current input position. The prediction result at least includes two stages of prediction candidate words in subsequent based on the prediction basis.

This disclosure also provides an efficient input prediction device based on another aspect, including a detecting module, which is adapted to detect and record a current input position and a text which the user is typing; a predicting module, which is adapted to form a prediction basis according to an input text and a current input position, search a database according to the prediction basis and obtain a prediction result. Therein, the prediction basis is an input text based on a preset word length before the current input position and each prediction result at least includes two stages of prediction candidate words in subsequent based on the prediction basis; a database, which is adapted to store words.

By setting a word length, this disclosure selects one or several entered words as a predicting basis and acquires at least two stages prediction candidate words in subsequent based on the prediction basis, therefore, prediction input results, with higher prediction efficiency, may be provided more quickly.

This disclosure also provides an efficient input prediction method based on its third aspect, including: detecting an input by a user; acquiring a prediction basis according to a input text history and a current input position, said prediction basis is an input text based on a preset word length before the current input position; searching a database according to the prediction basis to obtain a prediction result, the prediction result at least includes two stages of prediction candidate words in subsequent based on the prediction basis; storing said prediction result locally, detecting a user's further input, screening the local-saved prediction result according to a user's typing, and reporting back to users all or part of the prediction results.

This disclosure provides an efficient input prediction device based on its fourth aspect, including a detecting module, which is adapted to a text which the user is typing and a current input position; a prediction module, which is adapted to form a prediction basis according to an input text and a current input position, search a database according to the prediction basis and obtain a prediction result. Therein, the prediction basis is an input text based on a preset word length before the current input position and each prediction result at least includes two stages of prediction candidate words in subsequent based on the prediction basis; a database, which is adapted to store words; a screening module, which is adapted to record users' further input and screening the prediction results according to the detecting module; a feedback module, which is adapted to report back to users the screened results.

By predicting at least two stages of candidate words in subsequent based on the prediction basis and saving said prediction results including the two stages of prediction candidate words locally, it effectively avoids the delay caused by network transmission, even employing a cloud database, and improves user experience.

Discriptions of Figures

By reading the details on unrestricted examples of attached Figures, some other features, purposes and advantages of this disclosure may be more obvious:

Figure 1 is the framed diagram of an embodiment of the efficient input prediction device.
Figure 2 is the structure diagram of an embodiment for the database of the efficient input prediction device.
Figure 3 to Figure 6 are the framed diagrams of an embodiment of the efficient input prediction device.
Figure 7 is the structure diagram of an embodiment of providing grammar and semantic analysis for predicting basis of the efficient input prediction device.
Figure 8 and Figure 9 are the example diagrams of an embodiment which may effectively report results to users in the efficient input prediction device.
Figure 10 and Figure 11 are the example diagrams of an embodiment of the efficient input prediction device.
Figure 12 is the flow diagram of one specific embodiment of an embodiment of the efficient input prediction method.
Figure 13 is the flow diagram of the other specific embodiment in an embodiment of the efficient input prediction method.
Figure 14 is the structure diagram of one specific embodiment in an embodiment of the efficient input prediction device.
Figure 15 is the structure diagram of an embodiment of the said prediction devices according to Figure 14.
Figure 16 is the structure diagram of an embodiment of an obtaining module according to Figure 15.
Figure 17 is the structure diagram of another embodiment of an obtaining module according to Figure 15.
Figure 18 is the structure diagram of another embodiment of the efficient input prediction device.

Embodiments

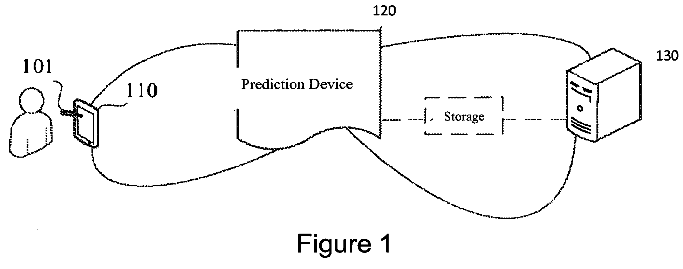

The following article will introduce specific embodiments of this disclosure, effective input prediction method and device, combining with attached Figures.
With reference to Figure 1, through fingers, tactile pens or other input devices, users may input texts in the input area of mobile communication terminal 110, such as the keyboard or the writing pad, by click or slide. The communication mayis established between a mobile communication terminal 110 and a prediction device 120. Wherein, device 101 may be other helpful devices, such as audio input device. The mobile communication terminal 110 may be a mobile phone, a tablet computer, but not limited on the above. The prediction device 120 may be software modules realized by computer programs or firmware which formulated on hardware devices; the prediction device 120 may be operated on the side of the mobile communication terminal, or the side of a remote server, or it may include a part operating on the mobile communication terminal and a part operating on a remote server.
Through the mobile communication terminal 110, the prediction device 120 may record the text inputted by input device 101, and take a preset word length of text entered previously, as a prediction basis. According to one embodiment, the prediction device 120 may acquire the current input position, such as detecting the current cursor position or detecting current characters which correspond with the cursor, and based on the current input position, acquire a preset word length of text entered before the current the current input, i.e. the prediction basis, Wherein, the preset word length may be adjusted by the computation capability of prediction device 120 and the storage capacity of mobile communication terminal 110. For example, the word length is set to be a natural number which is larger than 2.
In one embodiment, the preset word length is the number of all input or part of input words. For example, if the preset word length is 5, then the prediction basis shall be five words fully or partly input before the current input position; to be specific, when a user has already input "Fast food typically tends to skew", and the preset word length equals to 5, then the prediction basis is "food typically tends to skew"; when a user is inputting the first two letters "mo" of "more", and also has already input "Fast food typically tends to skew", the prediction basis is "typically tends to skew mo". In another embodiment, the begin symbol may also occupy one word length. Such as when preset word length is 3, and a user inputs "Fast food", the prediction basis shall be "[begin symbol]+fast+ food".
Then, based on the prediction basis, the prediction device 120 may query in the database 130 and get a prediction result. Wherein, the prediction result based on the prediction basis may at least include two stages of prediction candidate words in subsequent, in a context relation with the prediction basis.
According to one embodiment, the prediction device 120 may acquire prediction results by predicting progressively. First of all, the prediction device 120 may get the first stage of a prediction candidate word.
in an embodiment, the prediction device 120 will conduct a further segmentation on the prediction basis and inquire in the database 130 based on the segmentation result. Take the prediction basis having a word length of three as the example. The prediction device 120 will firstly detect the current cursor position or detect the characters corresponding to the current cursor position, and obtain a text sequence of at least three word length before the current position. For example, a user has input a text: "I guess you are", and the preset word length is 3, then the prediction basis is "guess you are".
Then, the prediction device 120 conducts a segmentation based on the prediction basis and acquires a preorder word in database 130, which including libraries of words in many stages, such as a first stage word library, a second stage word library, a third stage word library or even a higher stage word library. The stages of word library represent the word number stored in every storage cell of the library. For instance, in the first stage word library, each storage cell includes only one word, while in the second stage word library, each storage cell includes two words. The prediction device 120 cut the prediction basis and thus obtains the preorder words corresponding to the stage word library. There is a relationship between the word number N of a preorder word and word library stages M: N=M - 1. For example, in the segmentation on "guess you are", the preorder word is obtained as "are" in the second stage word library, the preorder is obtained as "you are" in the third stage word library, and the preorder word is obtained as "guess you are " through the fourth stage word library. A query result corresponding to the preorder word may be acquired by searching a storage cell in a corresponding stage word library.

According to one embodiment, the first stage word library stores a single word Wi$^1$ which is possibly input by a user and the probability of occurrence P (Wi$^1$) of the single word Wi$^1$. $\sum_{i=1}^{\infty} P(W_i^1) = 1$. For example, the word "you" and the probability of occurrence of "you" is 0.643%. In the second stage word library, it respectively stores every two words which likely occur together. Such as, word $W_{i,1}^2$ and word $W_{i,2}^2$ (i=1,...N), the ordering of these two words and the probability of co-occurrence of these two words in that ordering, such as $P(W_{i,1}^2 * W_{i,2}^2)$ or $P(W_{i,2}^2 * W_{i,1}^2)$. In the third stage word library, it respectively stores every three words which likely occur together, such as word $W_{i,1}^3$, word $W_{i,2}^3$ and word $W_{i,3}^3$ (i=1,...N), the ordering of these three words and the probability of co-occurrence of these three words in that ordering, such as $P(W_{i,1}^3 * W_{i,2}^3 * W_{i,3}^3)$ or $P(W_{i,1}^3 * W_{i,3}^3 * W_{i,2}^3)$ or $P(W_{i,2}^3 * W_{i,1}^3 * W_{i,3}^3)$ or $P(W_{i,2}^3 * W_{i,3}^3 * W_{i,1}^3)$ or $P(W_{i,3}^3 * W_{i,1}^3 * W_{i,2}^3)$ or $P(W_{i,3}^3 * W_{i,2}^3 * W_{i,1}^3)$. After acquiring a preorder word corresponding with every stage word library, the prediction device 120 search in the corresponding stage word library according to the preorder word and the ordering respectively, and get a query result. The combination of the query result and the preorder words makes up a storage cell in the storage cellcorresponding stage word library. For example, according to the preorder word "are" in second stage word library, the prediction device 120 get a query result, which is a word that might be input after the word "are", such as: "a", "beaches", "cold", "dogs", "young" and so on; furthermore, the prediction device 120 gets the query result by searching in the third stage word library according to the preorder word "you are", such as a, beautiful, correct, dreaming, young and so on.

Then, the prediction device 120 may further optimize query results obtained from every stage word libraries. To be specific, the prediction device 120 may sort the query results according to the probabilities from big to small; or through the probability threshold, the prediction device 120 may screen all query results from every stage word libraries, and thus, in the premise of probability reserve rate, the amount of calculation may be reduced, the power consumption may be saved and the reaction speed may be improved.

According to a specific embodiment, the database 120 only stores all words $W_i^1$ in the first word library and the probability of occurrence of every word P ($W_i^1$), and further forms a second stage or a third stage or a higher stage word library, on a basis of the words in the first stage word library and the probabilities of occurrence of those single words in a storage cell in a corresponding stage word library. Take the i$^{th}$ stage word library as an example. In the i$^{th}$ stage word library, every storage cell stores i words and every word among those i words in a storage cell can be a word in the first stage word library. Therefore, theoretically, when the first stage word library includes N words, the number of the storage cells in i$^{th}$ stage word library should be represented as N$^i$. With the increase of the number i, the amount of increasing storage cells is inevitably large. In addition, the probability of occurrence of every word in the first stage word library is random. And when some words appear simultaneously, the ordering of every word and related words may affects the probability of occurrence of every word. By considering the above factors, in this embodiment, different stage word libraries shall be conform to certain conditions. Specifically, take the second stage word library as an example. When i=1...$M_1$, the corresponding storage cell must be conform to the following condition, that is they have same first words, i.e., the first words, $W_{i,1}^2$, in these storage cells, satisfy: $W_{i,1}^2 = W_{j,1}^2$ (j=2,...,$M_1$), but the second words $W_{i,2}^2$ in these storage cells may be different. Similarly, when i=$M_1$+1,...$M_2$, the first words in the corresponding storage cells are the same, that is $W_{M1=1,1}^2 = W_{j,1}^2$ (i=$M_1$+2,...$M_2$), but the second words $W_{i,2}^2$ are different. Thus, in the second stage word library, for at least one storage cell with same first word, the probability is calculated as that of the second word occurring after the first word, i.e. $P(W_{i,2}^2|W_{i,1}^2)$. In one embodiment, sort words $W_{i,2}^2$ according the corresponding probability $P(W_{i,2}^2|W_{i,3}^2)$. In another embodiment, set a probability threshold $P_T$, screen all words $W_{i,2}^2$ with the same first word $W_{i,1}^2$ according to the set probability threshold, and only store the combination of the first word $W_{i,1}^2$ and part of the second words. Similarly, go through every first word $W_{i,1}^2$ in each storage cell in the second stage word library, according to its storage order in the first stage word library and the corresponding probability $P(W_{i,1}^2)$ in the first stage word library, and form the second stage word library.

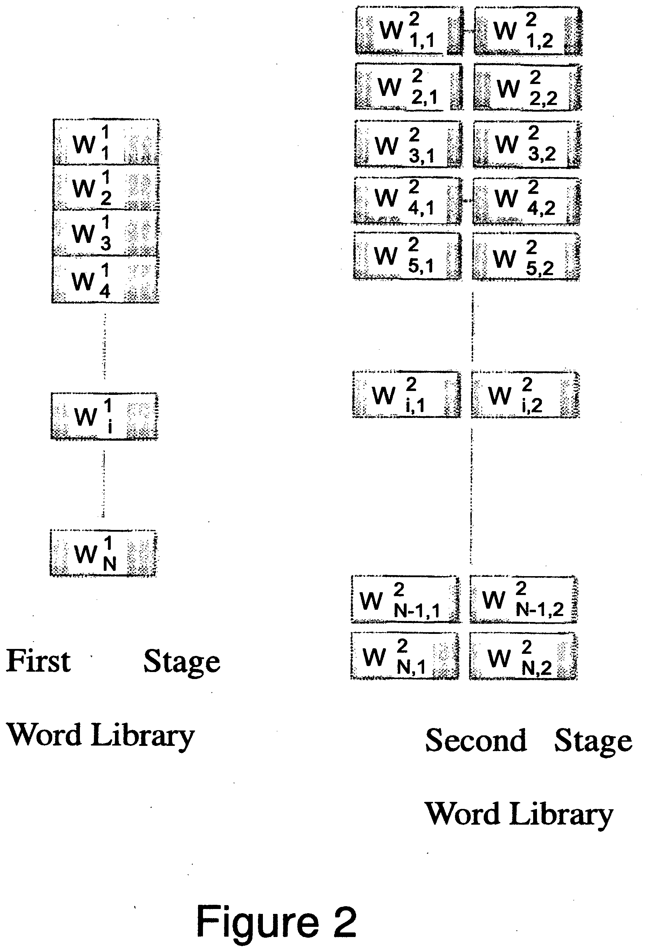

In this embodiment, see Figure 2, when there are N words in the first stage word library, the second stage word library may be simplified from the scattered N$^2$ storage cells to a compound storage structure, among which the compound storage structure include N branch storage structures and every branch storage structure further includes m storage cells. Wherein $n \leq N$, $m \leq N$, and every storage cell include 2 words, either of which may be acquired from the first stage word library. When the stage T is larger 2, the word library will include $m_1 *...* m_j (2 \leq j \leq T)$ storage cells. And $m_j \leq N$, and every storage cell include T words.

In another embodiment, numbers, letters or other forms of codes may be employed to replace the storage of word $W_{i,j}T$ or simplify the storage of probability of occurrence. Thus, the amount of calculation may be further reduced, the power consumption may be saved and the reaction speed may be improved. For example, according to the word storage order in the first stage word library, the words of which probability of occurrence is larger than probability $P_T$ is set as 1, and the words of which probability of occurrence is smaller than $P_T$ is set as 0, then the storage of words and the corresponding probability may be simplied to the storage of 0 and 1, thus the amount of calculation may be largely reduced.

Then, the prediction device 120 may acquire a query result of every preorder word in every stage word library, and set a weight.

In one embodiment, set a weight according to stages of every query result. For example, for the query results $a_1$, $a_2$...$a_n$ from the second word library, assign a weight $T_1$; for the query results $b_1$, $b_2$...$b_n$ from the third word library, assign a weight $T_2$; for the query results $c_1$, $c_2$...$c_n$ from the fourth word library, assign a weight $T_3$. In the specific embodiment, those query results from higher stage word libraries may be set a higher priority. For example, there is a relationship between the corresponding weight $T_i$ of the query result from the $i^{th}$ word library and the corresponding weight $T_i$ of the query result from the $j^{th}$ word library: $T_i >> T_i$, among $i > j$.

In another embodiment, different weights may be assigned to every query result from a stage word library; based on the assigned weights, a weighting calculation may be conducted, and therefore, a query result of every stage word library may be acquired. For example, for all query results $a_1$, $a_2$... $a_p$ in the second word library, the weight $t_1$, $t_2$...$t_p$ may be assigned. Among which, said weight is associated with the historical input, the input context and the priority of the word.

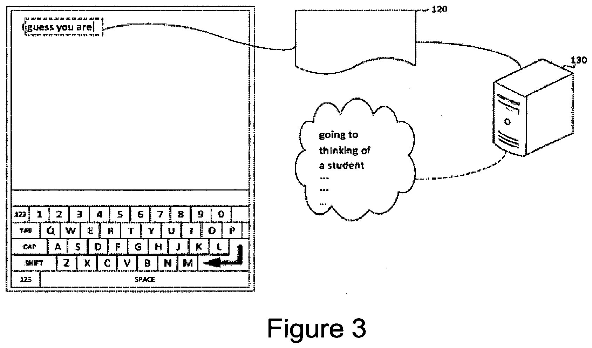

When the prediction device 120 has acquired the first result, the prediction device 120 may further form a new prediction basis based on the original prediction basis and the first candidate words. And based on the new prediction basis, the prediction device 120 may search in the database 130 and get a new result, which is the second candidate words. For example, refer to Figure 3, the mobile communication terminal 110 may detect the typing area, get a character string input from a keyboard "I guess you are" and send the character string to the prediction device 120. The prediction device 120 takes a three word length of entered text nearest from the current input as the prediction basis, which is "guess you are" and inquire in the database 130 to obtain several prediction results "going to", "thinking of". "a student" and so on. Every prediction result includes two stage prediction candidate words based on the prediction basis, and the second stage candidate words in every prediction result are based on the first stage candidate words "going", "thinking", "a" and prediction results from basis of "guess you are". It, that to obtain a prediction result by querying based on a prediction basis, makes a user to directly select the prediction words in subsequent to finish the text input in a premise of inputting as less text as possible, so as to speed the input and improve the input efficiency..

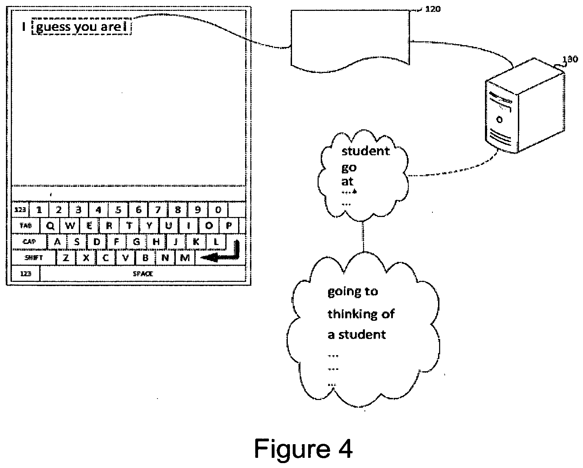

In one embodiment, according to the independent order of candidate words from the second stage prediction, the order of prediction results may further be acquired and reported to the user. To be specific, the prediction results may be sorted according to the historical input, the current context and the priority of every second stage candidate words. For example, see Figure 4, according the prediction basis "guess you are", the first stage prediction candidate words may be acquired with an order, i.e. "students", "going", "at". Then predict the second stage candidate words, based on the prediction basis and the first stage candidate word. After acquired the second stage candidate words, sort them according to users' historical input, context or priority, and thus obtains the prediction results, which are "(going) to", "(thinking) of", "(a) student", among which all words in brackets are the first stage prediction words corresponding with each second stage words. It can be seen that the order of predication results only refers to the order of the second stage candidate words. In this embodiment, after acquiring the first stage candidate words, it may reduce the calculation of sorting by, for example, sorting only based on the original priority of each candidate word, so that the amount of calculation may be reduced and the predication speed may be improved.

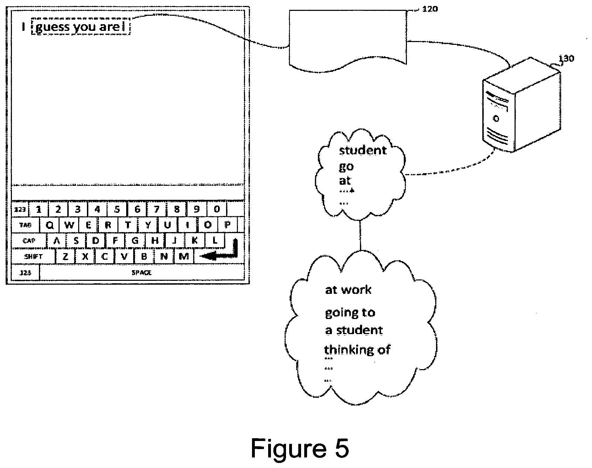

In another embodiment, further comprising: after acquiring the second stage candidate words, refering to the sorting of the current first stage candidate words, synthetically weight the candidate words so as to acquire the order may of prediction results including the first stage prediction candidate words and the second stage prediction candidate words.. For example, see Figure 5, according to the prediction "guess you are", the first stage candidate words are acquired with the following order, such as "student", "at", "going". Then based on the prediction basis and the first stage candidate words, further predict the second stage candidate words. When obtaining the second stage candidate words, acquire the order of second stage candidate words according to users' historical input, context or priority, such as "(going) to", "(thinking) of", "(a) student", "(at) work", among which all words in brackets are the first stage prediction words which corresponding with the second stage words. In addition, "going" and "at" rank higher as the first candidate words and will effect on other corresponding results. For example, associated weights may be assigned to the second stage candidate words by the order of the corresponding first stage candidate words. The higher the rank, the larger the weight is. By comprehensively considering the associated weights and the weights of second stage candidate words, the order of the prediction results may be determined.

According to the other embodiment, the prediction device 120 may also acquire the prediction results with multi-level prediction. For example, after acquiring the prediction basis, the prediction device 120 may conduct a segementation on this prediction basis and acquire preorder words to ge searched in the database 130. Then search the preorder words in every stage word library of the database 130. There is a matching relation between the stage of word library M' and the word number N' of a preorder word: N'=M'-x, wherein x is the candidate words number. Then the query may be conducted in every stage word library in a similar way as described above to get the prediction results.

When the prediction results include at least two or above stages candidate words, such prediction results, based on the same prediction basis , will be: it is composed of same words, such as A+B, but with different orders in different prediction results. Such as the prediction result T1 is A+B, and the prediction result T2 is B+A. In one embodiment, such prediction result with same words but different orders would be regarded as the different prediction results and sorted with other prediction results. In another embodiment, firstly determine the prediction results according to grammar and the user's historical input first. When there is no influence on the overall meaning of the prediction results by switching the order of the words, merge these prediction results, comprising same words and having a same or almost same meaning even with a changed word order together. Then, pick anyone according to the historical input or the prority and feed back to the user, so that the prediction accuracy may be improved in a limited feedback area. For example, the acquired prediction results include: prediction result 1 "步跑了", prediction result 2 "跑步了". Even the orders of the words consisting the prediction result are different, the meanings are not largely changed with the changing of the order of the words in the perspective of grammar. Then these two prediction results may be merged into one and any of them is picked, randomly or according to the historical input or the porrity of the prediction results, to feedback to the

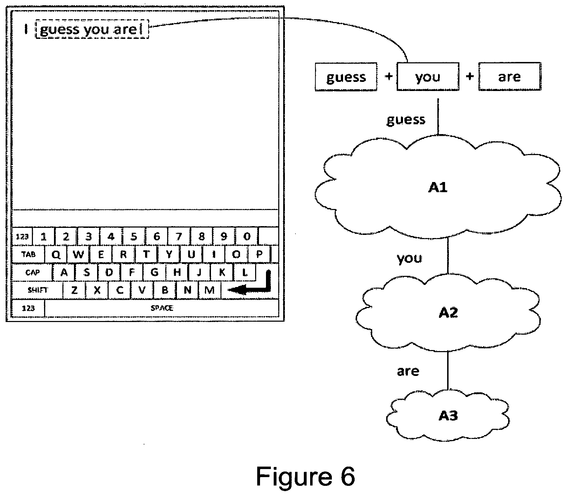

According to another embodiment, the prediction 120 may directly sent acquired prediction basis to the database 130 and match with data recorded in database 130, to select a matched result as a corresponding prediction result. For example, a prediction basis includes a set of word length of words, i.e. 2 or 3 words. The prediction device 120 will separate the prediction basis into a combination of several single words, extract each corresponding word based on its order in the prediction basis and retrieve database 130 one by one. For example, see Figure 6, for the prediction basis "guess you are", the prediction device 120 will separate it, and get "guess", "you " and "are". Then, the prediction device 120 will search in database 130 firstly according to "guess", and get the result A1. And then, the prediction device 120 will search in A1 according to "you", and get the result A2 including "guess you". At last, the prediction device 120 will further search in A2 and get the result A3 including "guess you are".

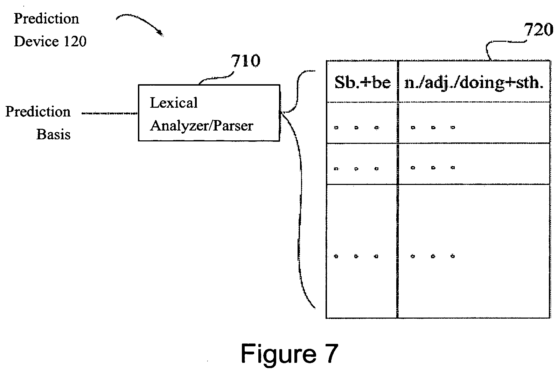

The above search processes in database 130 or every stage word library of database 130 may further include: a grammar and semantic analysis based on the prediction basis. Furthermore it may include combining analysis results and query results from the database 130, or screening in query results based to analysis results, so as to improve prediction accuracy. According to one embodiment, see Figure 7, the prediction device 120 may include grammar analysis device 710 and the corresponding candidate word library 720, among which the grammar analysis device 710 will analyze grammar of prediction basis, which the candidate word library 720 will save candidate words in an order corresponding with different grammars. For example, when the prediction basis is "you are", the grammar analysis device 710 may analyze the grammar structure of this prediction basis. When it is detected as in the structure of "sb. + be", the corresponding candidate word library 720 may provide a present participle construction of verb, or an adjective or a noun. The grammar analysis device 710 may then retrieve in the database 130 based on the prediction basis and further checks the acquired results, to gett a prediction result which obeys the grammar rule. According to another embodiment, the prediction device 120 may be equipped with a semantic analysis device, providing a semantic analysis to prediction basis. Or the prediction device 120 may be equipped with a preference library, which collects the words, phrases and sentences used to input, adds up the time of inputting the words, phrases and sentences, makes a record of those been frequently input, i.e. user's preferences, according to the statistics, and screen the retrieved results based on the recorded preferences, so as to provide a prediction result meeting the user's preference.

When acquiring the prediction results, the prediction device 120 may send all prediction results and the corresponding orders and save them in the mobile communication terminal 110.

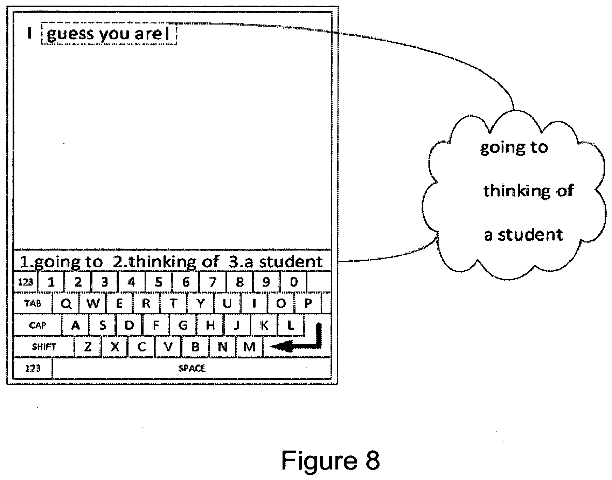

According to one embodiment, see Figure 8, the prediction device 120 may display all results in the corresponding orders in the display area of mobile communication terminal 110 and feed back to users.

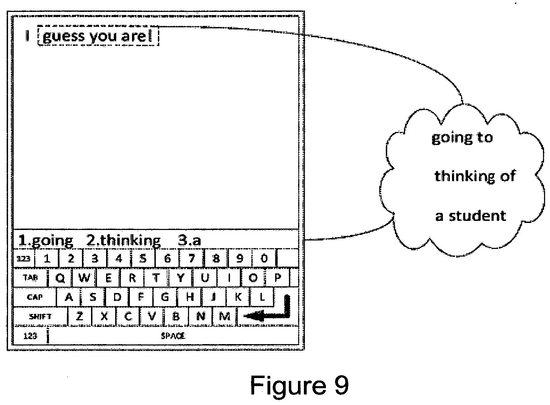

According to another embodiment, the prediction device 120 continues to detect users' input from mobile communication terminal 110 and predict the incoming action. The prediction device 120 may choose not to display all acquired results or choose to report the first stage candidate words to users, as referred to Figure 9.

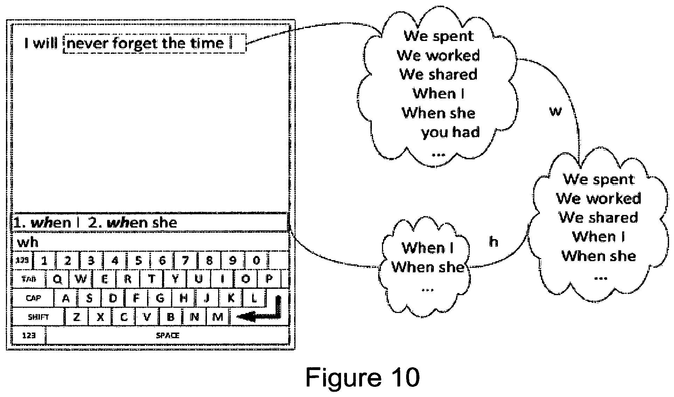

When the prediction device 120 detects a further input, it will record the current input, get the current characters, and then update the acquired prediction result based on the current input text, so as to higher the prority of part of the predicton results, or screen the acquired prediction, store only the prediction meeting the screening demands or feed back only the prediction meeting the screening demands to the user. The prediction results that meets the screening demands or makes the prority higher include: those which starts with one or more letters same as those input by the user. For example, see Figure 10, when the prediction device 120 detects that the user inputs "I will never forget the time", the prediction device 120 firstly acquires prediction results "we spent", "we worked", "we shared", "when I", "when she", "you had" according to the prediction basis "never forget the time".Then, the prediction device 120 further detects the user's input. When the further input is detected as "w", the prediction device 120 begins to screen or update the priority of current prediction results according to the new inputs, and keeps the prediction results starting with the first character of "w", i.e. "we spent", "we worked", "we shared", "when I", "when she". Then the prediction device 120 continues to detect the user's input. When the following input is detected as "h", the prediction device 120 acquires the input and continues to screen or update the priority of the current predicton results according to the current input "wh", and as a result, keeps "when I" and "when she".

In another embodiment, according to the current input and the original prediction basis, the prediction device 120 may form a new prediction basis and retrieve it in the database 130 to get a corresponding prediction result.

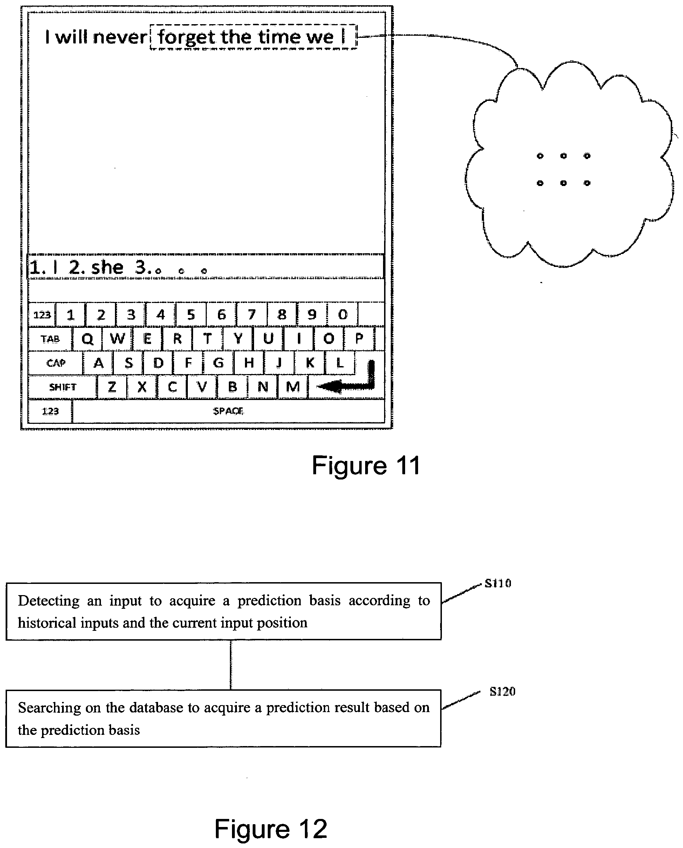

When the user is detected, by the prediction device 120, to have selected a candidate wordin the candidate bar or or confirmed an input word, then prediction device 120 detects and acquires the candidate words selected or confirmed,and searches in the first stage prediction candidate words according to acquired words. When there is a predicton result having a word in the first stage candidate words same with that acquired, prediction device 120 presents the second stage candidate word of the prediction result to the user through communication terminal 110. For example, when the prediction device 120 acquires the prediciton results, "we spent", "we worked", "we shared", "when I", "when she", "you had" by acquiring, communication terminal 110 further detects the user's input. When it is detected that the user selects "we" or confirms to input "we", see Figure 11, the prediction device 120 may feed back "spend", "worked", "shared" to users through mobile communication terminal 110. For example, these second stage candidate words may be displayed in the display area of mobile communication terminal 110 or may be broadcasted through mobile communication terminal 110 in sequent.

In another embodiment, the prediction device 120 may continue to detect users' operation. Every time when the user finishes an input of a word, the prediction device 120 may be triggered to conduct a new search. To be specific, the prediction device 120 may form a new prediction basis according to a current input and the original prediction basis, queries in the database 130 and obtains a prediction result based on the update prediction basis. For example, according to the prediction basis "forget the time", the prediction basis 120 acquires prediction results "we spent", "we worked", "we shared", "when I", "when she", "you had" and so on. When the user selects "we" or confirms to input "we", see Figure 11, the prediction device 120 displays "spent", "worked", "shared" to users, while continues to search according to the new prediction basis "the time we" so as to get a corresponding result, which is two or more words following "we".

In another embodiment, the disclosure also includes to display a set number of prediction results to the user and presents the change of prediction results in real time while the user is inputting or has selected or confirmed. For example, the characters or the words in the prediction results same with that input or selected or confirmed by the user may be highlighted., so as to provide a more direct feedback. For instance, the prediction device 120 displays the prediction results "we spent", "we worked", "we shared", "when I", "when she", "you had" to users. Then, the prediction device 120 continues to detect the user's input. When the following input is detected as "w", the prediction device 120 may screen the prediction results or update the priority of the prediction result according to the detected character, and then update those present according to the screened or updated result, and highlight the current input character "w". The prediction device 120 continues to detect the user's input in the keyboard. When the word "when" is further detected, the prediction device 120 may further update the display according the further input. For instance, the display is updated to be "when I", "when she", and "when" is highlighted, so that better users experience may be provided.

According to an aspect of the disclosure, based on a prediction basis, the prediction device 120 may acquire a prediction result in a cloud database or a local database 130 and save the prediction result in the local mobile terminals 110. With the multiple prediction stages, i.e. prediction results including at least two stages, and storing the prediction results in local terminal 110, therefore, prediction device 120 once detects that the current input is as the same as part or the whole of the first stage candidate words, it can quickly acquire an associated second prediction candidate word from the prediction results stored locally and present it to the user. On one hand, this can largely speed the prediction; on the other hand, it may reduce even avoid the delay caused by network transmission, and provide a better user experience.

In addition, by taking the use of a cloud database, since it may reply on the cloud terminal to predict, updating the cloud database regularly can make sure the accuracy of prediction and error correction, so as to avoid the update on local database to be too frequent.

See Figure 12, the disclosure provides an efficient predictive text input method, including step S110, detecting an input to acquire a prediction basis according to historical inputs and a current input position; step S120, searching in the database to acquire a prediction result based on the prediction basis, wherein said prediction result includes at least two stages candidate words subsequent to the prediction basis.

To be specific, in step S110, when the user continues to input in a keyboard, detecting an input may include detecting an input text, for instance, obtaining a historical input by analyzing the input data including text, voice and so on. Step S100 may further include, detecting an input may include detecting a current input position; for instance, obtaining a current input position by detecting cursor coordinates, a cursor position, number of character corresponding to the cursor and other data. Step S110 may further include: get the prediction basis according to a current input position. Wherein, said prediction basis may be a preset word length of input text before the current input position.

According to one embodiment of the disclosure, database may further include several stages word libraries. Accordingly, step S120 may further include dividing the prediction basis to get at least an preorder word for inquiry. Wherein, the preorder words corresponds to each stage word library in database, and, the sum of the word number of a preorder word and that of the predication candidate words obtained according to the preorder word equals to the stage number of word library, which also is the word number stored in the minimum storage cells of the stage word library.

According to one embodiment of the disclosure, the prediction result may include an extra stage candidate word. Here, the step S120 may further include, get a prediction candidate word stage by stage based on said prediction basis. Take the prediction results including two stage candidate words as the example. Step S120 may include: obtaining the first stage candidate words based on the said prediction basis; obtaining the second stage candidate words based on the said first stage candidate words and the prediction basis.

The step S120 may further include: analyzing on prediction basis from every retrieve and screen on the prediction results based on the analysis result. For example, the analysis may include conducting an one-sided analysis or multi-analysis on semantics, grammar, and context and so on.

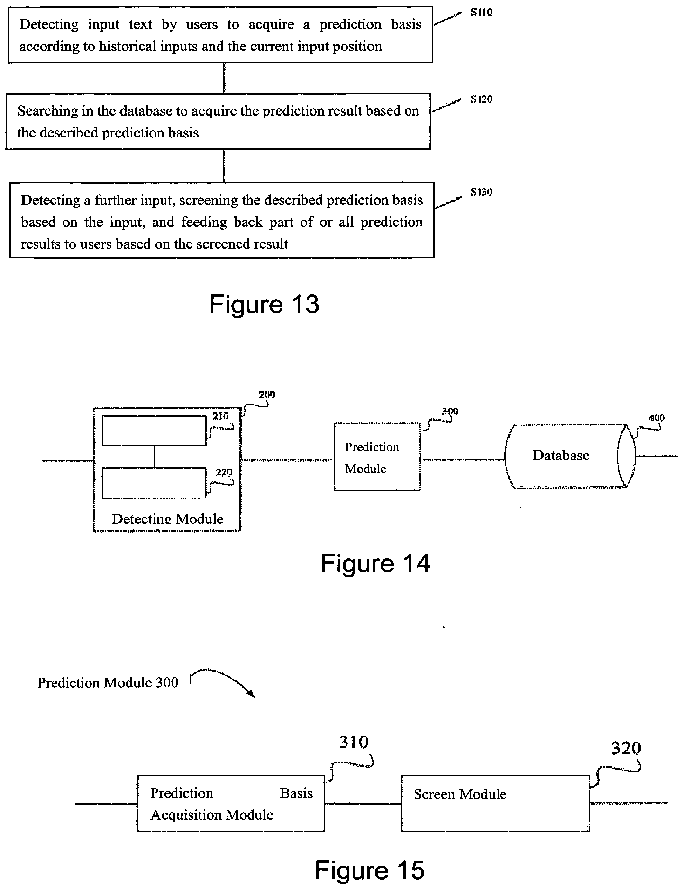

According Figure 13, the disclosure may also provide an efficient predictive text input method. After the above step S120, it comes to step S130, which may detect a further input, screen the prediction results according to the input and feed back part of or all of results according to the screened result.

According to one embodiment of this disclosure, after acquiring the prediction results from the cloud database, it may further include storing said prediction results to local database. According to another embodiment, data in cloud database may be downloaded to local, so that a prediction result may be obtained by similar steps from the local database.

In step S130, continuing to detect an input may further include: when part of the word is further detected to be input, screen the prediction resulte based on the further input part, so that the first stage candidate word of the screened prediction result may include the further input part. For example, when an user further inputs "win", then the first stage candidate words begining with "win" or including "win" may be taken as the screened prediction result. When a selection of a word or an input of the whole word is detected, match the first stage candidate words of the prediction results with the selected or input word, and take the prediction result matched as a screened prediction result.

In step S130, feeding the screened prediction results back to users may further include: feed all screened prediction results back to the user. When presenting all the prediction results to the user, it may not make a distinction between the entered words or selected words; or it may highlight those words with different colors, capital or small form, fonts, bold, italic types and other marking means; or, it may feed back the rest candidate words other than the first stage candidate words.

In another embodiment, the above efficient predictive text input method may also present the prediction results to via multi-media. For example, it may display all acquired results, or it may mark the prediction candidate words of the prediction result in the candidate word list via tagging; or it may display candidate words in other area of the screen rather than the candidate word list; or it may report one or more words of one or more obtained prediction results to users via loudspeakers or other mediums; or it may feedback the prediction results via other multi-media.

See Figure 14, this disclosure also provide a predictive text input device, including a detecting module 200, which is adapted to detect and making a record of an input text and a current input position; a prediction module 300, which is adapted to form a prediction basis according to the input text and the current input position, search in the database according to the prediction result and obtain a prediction result; wherein every prediction result at least includes two stage candidate words based on the prediction basis; and database 400, which is adapted to store words.

The detecting module 200 further includes a detecting cell 210, which is adapted to detecting a current input position, and a recording cell 220, which is adapted to record the input.

See Figure 15, the prediction module 300 further includes a prediction basis acquisition module 310, which is adapted to get a prediction basis according to a current input position and historical inputs, wherein said prediction basis may be a set word length of the text before the current input position; anda query module 320, which is adapted to query in database 400 according to the prediction basis, and acquire a corresponding prediction result.

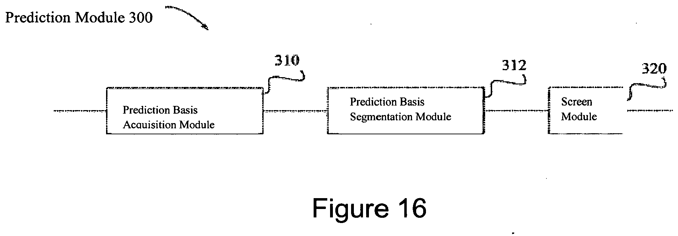

See Figure 16, the prediction basis acquisition module 310 may further include a prediction basis segmentation module 312, which is adapted to divide the prediction basis. In one embodiment, based on the division results, the query module 320 may acquire prediction bases with different word numbers, separately search, based on the prediction bases, inn different stages word libraries in the database 400, and get corresponding prediction results. And the difference between the word number of the prediction basis and the stage number of the word library is the word number of prediction candidate words.

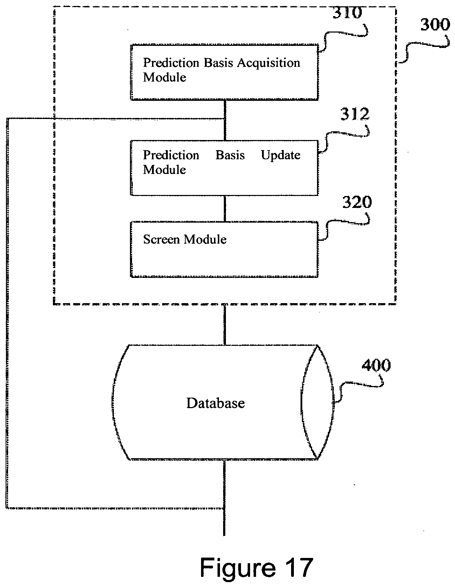

See Figure 17, the prediction basis acquisition module 310 may further include a prediction basis update module 314, which is adapted to update the prediction basis. In one embodiment, the query module 320 may search in the database 400 based on the current prediction basis, and acquire the first stage candidate words. Here, the prediction basis update module 314 may form a new prediction basis according to the original prediction basis and the first stage candidate words. The query module 320 may conduct a new search again according to the new prediction basis, acquire the following candidate words, and get the prediction results with at least two stage prediction candidate words.

In one embodiment, according to the prediction basis, the prediction module 300 may make a semantic and grammar analysis on the prediction basis and obtain the analysis result, wherein said analysis may include analyzing the prediction basis using the semantic rules and grammatical rules. Also, the prediction module 300 may further include screening the prediction results according to the analysis result.

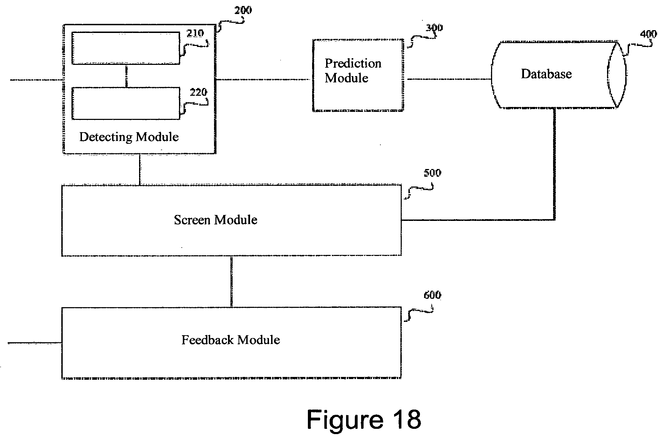

See Figure 18, this disclosure also provides a predictive input device. Besides a detecting module 200, a prediction module 300 and a database 400, it may further include a screen module 500, which is adapted to screen the prediction results according the further input recorded in the detecting module 200; a feedback module 600, which is adapted to feed the screened results back to the user.

The screen module 500, determining the further input of users based on results from the detecting module 200, may further include : when part of a word is detected to be input, screening the prediction results based on the further input part of a word, so that the first stage candidate words of the screened prediction results include or begin with the further input. When a word is detected to be selected or completely input, y matching the first stage candidate words with the word selected or input, so that the first stage candidate words of the screened prediction results are the words selected or input, or include the word selected or input, or start with the word selected or input.

The feedback module 600 may feed part of or all of prediction results back to the user. In one inplementation, the feedback module 600 may include a display equipment, which may display all prediction results to users and identify those input or selected by the user vie a certain mark, or may display the rest part of prediction results based on users' inputs or selection. When presenting the prediction results, the prediction resultmay be displayed in the candidate words bar, or may be displayed in other area rather than the candidate words bar, such as the same side of candidate words bar, the top of the candidate words bar, the middle between the candidate words bar and the keyboard, or a preset place in the text display area, or the corresponding area in the keyboard. The display mode may be time-by-time display in accordance with the numbers of candidate words, or it may display all candidate words simultaneously. In another inplementation, it may also include feed back one or more words of one or more obtained prediction results to users via other media equipments, such as a loudspeaker.

This disclosure may apply to many languages and shall not be limited by concrete languages published in examples. It shall understood by those in the art that the disclosure may apply to Indo-European languages, such as English, French, Italian, German, Dutch, Persian, Afghan, Finnish and so on; or Sino-Tibetan languages, such as Simplified Chinese, Traditional Chinese, Tibetic language and so on; or Caucasian Family languages, such as Chechen language, Georgia language and so on; or Uralic languages such as Finnish, Hungarian and so on; or North American Indian languages such as Eskimo, Cherokee, Sioux, Muscogee language and so on; or Austro-Asiatic family languages such as Cambodia, Bengalese, Blang language and so on; Dravidian languages, such as Tamil language and so on; or Altaic Family languages such as East Altai, West Altai and so on; or Nilo-Saharan Family languages such as languages used in north African or West African; or Niger-Congo Family languages, such as Niger language, Congolese, Swahili and so on; or Khoisan languages, such as Hottentot, Bushmen language, Sandawe and so on; or Semitic Languages such as Hebrew, Arabic, Ancient Egypt, Hause language and so on; or Austronesian family languages, such as Bahasa Indonesia, Malay language, Javanese, Fijian language, Maori and so on.

For the purpose of simple description, the limited stage word librarys or candidate words are taken as the example, with possible limited stages candidate words listed. However, those in the art should understand that the disclosure shall not be limited by the above stages of candidate words or candidate words number every time acquires. For example, the more predict stages there are, the more the candidate words are and the higher the accuracy is, however, since every time the transmit may cost more flux, and more space is needed as well. In practical use, the stages of candidate word libraries and the number of candidate words may be determined based on the accuracy, flux, storage space and so on.

\The "word" described above refers to the minimum composition unit in input language whose meaning shall have contribution on sentenses or paragraphs. It may employ the actual meanings, and also may be just the expression of certain semantemes which just to cooperate with context. For example, in Chinese, "word" means an individual Chinese character; in English, "word" may just be an English word. The "character" describe above means the minimum compositon unit which correlates with words. "Character" may be the letters which composing of English words, or may be phoneti alphabets or strokes which composing of Chinese characters.

The specific embodiments are described above. It is understood that it is not limited tot the disclosed embodiments. A transformation or an amendment, , within the the scope of the claims, doesn't effect the spirt of the disclosure.

## Claims

1. A predictive text input method, charactered in that, includes:

   detecting an input by a user;
   acquiring a prediction basis according to a historical text already input and a current input position, wherein said prediction basis is a preset word length of an input text based on the current input position;
   searching in a database according to said prediction basis to obtain a prediction result, wherein said prediction result includes at least two stages of prediction candidate words in subsequent based on said prediction basis.

2. The method as claimed in claim 1, charactered in that, further includes:

   after acquiring the first stage candidate words, acquire a subsequent new stage candidate words based on the former prediction basis, the acquired prediction candidate words and the new prediction basis.

3. The method as claimed in claim 1, charactered in that, further includes:

   divide said prediction basis to acquire preorder words containing different numbers of words.

4. The method as claimed in claim 1, charactered in that, said data further includes several word libraries with different stages, searching in a database further includes searching said preorder word in said stage word library and there is a set match relationship between the number of words of said preorder word and the stage of the word library.

5. The method as claimed in claim 1, charactered in that, said database further includes at least a $N^{th}$ stage word library, wherein every storage cell in the $N^{th}$ stage word library includes N words and every word is corresponding to the probability of said $N^{th}$ stage word library, wherein N is a natural number.

6. The method as claimed in claim 5, charactered in that, said every word is corresponding to the probability of said $N^{th}$ stage word library further includes: said word corresponds to the probability which said word exists in said $N^{th}$ stage word library as it is in the corresponding storage cell.

7. The method as claimed in claim 5, charactered in that, said storage cell further includes: N words, sorting of N words and the corresponding probability which every word appears in that order.

8. The method as claimed in claim 6 or 7, charactered in that, further includes: said probability corresponding to every word is simply stored via numbers, letters or other forms of codes.

9. The method as claimed in claim 5, charactered in that, said searching in a database according to the prediction basis further includes: sort or screen said prediction candidate words acquired through a query in $N^{th}$ stage word library.

10. The method as claimed in claim 9, charactered in that, said sort or screen the prediction candidate words acquired through a query in $N^{th}$ stage word library further includes: according to the stage number of the word library corresponding to the prediction candidate words, assigning a same weight to prediction candidate words from the same stage word library, or assigning different weights to candidate words from the same word library.

11. The method as claimed in claim 10, charactered in that, further includes: for every candidate words from the same stage word library, assigning different weights according to historical inputs, the context and its corresponding priority.

12. The method as claimed in claim 1, charactered in that, further includes: a semantic and grammar analysis based on the prediction basis.

13. The method as claimed in claim 1, charactered in that, further includes:the preset word length is a natural number larger than two.

14. The method as claimed in claim 13, charactered in that, further includes: beginning symbol may be set as one word length.

15. The method as claimed in claim 1, characterized in that, said obtaining a prediction result further includes:

storing said prediction result in local;
detecting a further input;
screening said prediction result based on said further input;
feeding part of or all prediction results back to a user.

16. The method as claimed in claim 15, characterized in that, said screening prediction result based on the further input further includes: screening the prediction result based on part of a word from the further input, so that the first stage candidate words in the screened prediction result includes said further input.

17. The method as claimed in claim 15, characterized in that, said screening prediction result based on the further input further includes: according to a word further selected or completely input, matching the first stage candidate words with said word selected or input.

18. The method as claimed in claim 1, characterized in that, said detecting an input further includes: detecting at least one of a cursor coordinate, a cursor position or a voice message.

19. The method as claimed in claim 1, characterized in that, further includes: reporting one or more words in one or more acquired prediction results back to users via multimedia.

20. The method as claimed in claim 1, characterized in that, feedback to users via multimedia further includes: marking the prediction candidate words of the prediction result in the candidate word list via tagging; or displaying candidate words in other area of the screen rather than the candidate word list.

21. A predictive text input device, characterized in that, includes:

a database, adapted to storing words;
a detecting module, adapted to detect and record an input text and a current input position;
a predicting module, adapted to form a prediction basis based on the input text and the current input position, searching in the database according to the prediction basis and obtain a prediction result ;
wherein, said prediction basis refers to a preset word length of input text based on the current input position, and every prediction result includes at least two stages of prediction candidate words in subsequent based on the prediction basis.

22. The device as claimed in claim 21, characterized in that, said predicting module further includes: a prediction basis segmentation module, adapted to divide said prediction basis and acquire prediction bases with different word numbers.

23. The device as claimed in claim 21, characterized in that, said predicting module further includes: a prediction basis update module, adapted to update the prediction basis.

24. The device as claimed in claim 23, characterized in that, said prediction basis update module forms a new prediction basis based on the original prediction basis and the acquired prediction candidate words.

25. The device as claimed in claim 21, characterized in that, further includes:

a screen module, adapted to screen said prediction results according to a further input recorded by said detecting module; and
a feedback module, adapted to feedback the results.

26. The device as claimed in claim 21, characterized in that, said database includes more than one word libraries with different stages, to provide a preorder word searching in different stages word libraries; wherein there is a set match relationship between the number of words of said preorder word and the stage of the word library.

27. The device as claimed in claim 21 or 25, characterized in that, said database further includes at least a $N^{th}$ stage word library, wherein every storage cell in the $N^{th}$ stage word library includes N words and every word is corresponding to the probability of said $N^{th}$ stage word library, forming said storage cell.

28. The device as claimed in claim 27, characterized in that, said storage cell further includes: N words, sorting of N words and the corresponding probability which every word appears in that order.

29. The device as claimed in claim 28, characterized in that, further includes the probability corresponding to every word is simply stored via numbers, letters or other forms of codes.

120

101

130

110

Prediction Device

Storage

# Figure 1

First Stage Word Library

Second Stage Word Library

Figure 2

guess you are

going to
thinking of
a student
...
...
...

| 123 | 1 | 2 | 3 | 4 | 5 | 6 | 7 | 8 | 9 | 0 |
| TAB | Q | W | E | R | T | Y | U | I | O | P |
| CAP | A | S | D | F | G | H | J | K | L | |
| SHIFT | Z | X | C | V | B | N | M | ← | |

| 123 | SPACE |

# Figure 3

I guess you are

120

130

student
go
at
...

going to
thinking of
a student
...
...
...

# Figure 4

Figure 5

Figure 6

Prediction
Device 120

710

720

Prediction ----------- 
Basis

| Lexical Analyzer/Parser |
|---|

| Sb.+be | n./adj./doing+sth. |
|---|---|
| · · · | · · · |
| · · · | · · · |
| · · · | · · · |

# Figure 7

Figure 8

Figure 9

I will never forget the time

1. **wh**en | 2. **wh**en she

wh

| 123 | 1 | 2 | 3 | 4 | 5 | 6 | 7 | 8 | 9 | 0 |
|---|---|---|---|---|---|---|---|---|---|---|
| Tab | Q | W | E | R | T | Y | U | I | O | P |
| CAP | A | S | D | F | G | H | J | K | L | |
| SHIFT | | Z | X | C | V | B | N | M | ← |
| 123 | | | | SPACE | | | | | | |

We spent
We worked
We shared
When I
When she
you had
...

w

We spent
We worked
We shared
When I
When she
...

When I
When she
...

h

## Figure 10

I will never forget the time we I

1. I  2. she  3.

| 123 | 1 | 2 | 3 | 4 | 5 | 6 | 7 | 8 | 9 | 0 |
| TAB | Q | W | E | R | T | Y | U | I | O | P |
| CAP | A | S | D | F | G | H | J | K | L | |
| SHIFT | Z | X | C | V | B | N | M | ← | |
| 123 | SPACE | | | | | | | | | |

## Figure 11

Detecting an input to acquire a prediction basis according to historical inputs and the current input position ⟋ S110

Searching on the database to acquire a prediction result based on the prediction basis ⟋ S120

## Figure 12

| Detecting input text by users to acquire a prediction basis according to historical inputs and the current input position | S110 |

| Searching in the database to acquire the prediction result based on the described prediction basis | S120 |

| Detecting a further input, screening the described prediction basis based on the input, and feeding back part of or all prediction results to users based on the screened result | S130 |

## Figure 13

## Figure 14

Prediction Module 300

| Prediction Basis Acquisition Module | 310 | Screen Module | 320 |

## Figure 15

Prediction Module 300

**310**

| Prediction Basis<br>Acquisition Module |

**312**

| Prediction Basis<br>Segmentation Module |

**320**

| Screen<br>Module |

# Figure 16

Figure 17

200

210

220

Detecting Module

300

Prediction
Module

400

Database

500

Screen Module

600

Feedback Module

# Figure 18

# INTERNATIONAL SEARCH REPORT

| | |
|---|---|
| | International application No. |
| | **PCT/CN2015/084484** |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

G06F 17/30; G06 3/023

Documentation searched other than minimum documentation to the extent that such documents are included in the fields searched

Electronic data base consulted during the international search (name of data base and, where practicable, search terms used)

CNTXT; CNABS; DWPI; SIPOABS; VEN: easy, candidate, level, predict+ or forecast+, start+, CHULE, section, g06f 3/023+, forecast+, G06F 3/0233, lexicon, efficien+, G06F 3/0237, G06F 3/023, fast; DAI, Yun; g06f17/30+, &"m2 /pn/null", input+, length, position, G06F 17/30, g06f17/30, smooth, predict+, text?; WU, Kun; word?, location, character?, COOTEK, SOGOU

## C. DOCUMENTS CONSIDERED TO BE RELEVANT

| Category* | Citation of document, with indication, where appropriate, of the relevant passages | Relevant to claim No. |
|---|---|---|
| X | CN 102236423 A (BEIJING SOGOU TECHNOLOGY DEVELOPMENT CO., LTD.), 09 November 2011 (09.11.2011), description, paragraphs 10, 17, 22-25, 32, 36, 78, 128-131 and 134-139 | 1-4, 12-26 |
| A | CN 102236423 A (BEIJING SOGOU TECHNOLOGY DEVELOPMENT CO., LTD.), 09 November 2011 (09.11.2011), the whole document | 5-11, 27-29 |
| PX | CN 104102720 A (SHANGHAI CHULE (COOTEK) INFORMATION TECHNOLOGY CO., LTD.), 15 October 2014 (15.10.2014), claims 1-4 and 8-22 | 1-4, 12-26 |
| A | CN 101833547 A (SAMSUNG ELECTRONICS (CHINA) R&D CENTER; SAMSUNG ELECTRONICS CO., LTD.), 15 September 2010 (15.09.2010), the whole document | 1-29 |
| A | CN 102640089 A (TOUCHTYPE LTD.), 15 August 2012 (15.08.2012), the whole document | 1-29 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | **02 November 2015 (02.11.2015)** |

| Name and mailing address of the ISA/CN: | Authorized officer |
|---|---|
| State Intellectual Property Office of the P. R. China No. 6, Xitucheng Road, Jimenqiao Haidian District, Beijing 100088, China Facsimile No.: (86-10) 62019451 | **YAO, Mengqi** Telephone No.: (86-10) **62411765** |

Form PCT/ISA/210 (second sheet) (July 2009)

## INTERNATIONAL SEARCH REPORT
### Information on patent family members

International application No.

**PCT/CN2015/084484**

| Patent Documents referred in the Report | Publication Date | Patent Family | Publication Date |
|---|---|---|---|
| CN 102236423 A | 09 November 2011 | None | |
| CN 104102720 A | 15 October 2014 | None | |
| CN 101833547 A | 15 September 2010 | CN 101833547 B | 05 August 2015 |
| CN 102640089 A | 15 August 2012 | WO 2011042710 A1 | 14 April 2011 |
| | | US 9046932 B2 | 02 June 2015 |
| | | EP 2486470 A1 | 15 August 2012 |
| | | US 2012197825 A1 | 02 August 2012 |

Form PCT/ISA/210 (patent family annex) (July 2009)